# EUROPEAN PATENT SPECIFICATION

(11) **EP 0 282 596 B1**
(45) Date of publication and mention of the grant of the patent: **03.11.1993**
(21) Application number: 87904954.2
(22) Date of filing: 29.07.1987
(51) Int. Cl.: G06F 15/62

(54) **IMAGE PROCESSOR**
BILDBEHANDLUNGSVORRICHTUNG
PROCESSEUR D'IMAGES

(30) Priority: 20.08.1986 JP 194567/86
(43) Date of publication of application: 21.09.1988
(73) Proprietor: FANUC LTD., Minamitsuru-gun, Yamanashi 401-05 (JP)
(72) Inventor: KURAKAKE, Mitsuo, Hino-shi Tokyo 191 (JP); OTSUKA, Shoichi, Hino-shi Tokyo 191 (JP); MURAOKA, Yutaka, Hachioji-shi Tokyo 192 (JP)
(74) Representative: Billington, Lawrence Emlyn
(86) International application number: JP8700559
(87) International publication number: WO8801413

(56) References cited:
- FR-A- 2 543 771
- JP-A- 5 970 358
- JP-A-58 127 466
- JP-A-60 211 574
- JP-A-61 107 475
- PATENT ABSTRACTS OF JAPAN, vol. 9, no. 72 (P-345)[1795], 2nd April 1985; & JP-A-59 205 665 (RICOH K.K.) 21-11-1984

## Description

This invention relates to a picture processing apparatus having a function for reducing, at a predetermined scale, a picture displayed on a display screen.

Conventionally, an operation for reducing a picture in size entails extracting picture data from a frame memory in which a source picture has been stored in advance, and operating on the data with complicated hardware.

With the conventional picture processing apparatus of this kind, however, hardware costs are high and high-speed processing cannot be executed owing to the complicated operations involved.

FR-A-2 543 771 is concerned with reducing a picture involving changing clock periods in dependence upon the desired reduction scale factor.

Moreover, US-A-4 503 469 relates to a picture processing apparatus as set out in the precharacterising part of the attached claim 1.

According to the present invention there is provided a picture processing apparatus for performing a picture reducing and editing operation between two frame memories, comprising:
first and second frame memories;
first and second address generating means for the first and second frame memories; and
first and second shift clock generating means for the first and second frame memories;
characterised in that:
the first and second frame memories are of dual port construction and are each composed of a data register having a serial-access port, and a memory cell array connected to the data register and having a random-access port;
the first and second address generating means are operable to designate row and column addresses with respect to the memory cell arrays of the frame memories;
setting means are provided for setting a picture reduction scale factor between said frame memories;
the first and second shift clock generating means are operable to control a serial input/output of picture data from the serial-access port of the data register of each of said frame memories; and
varying means are provided for changing clock periods of the shift clock generating means in dependence upon a set reduction scale factor in a column direction.

An embodiment of the present invention is preferably constructed in a simple manner without the use of complicated hardware, and may be capable of reducing and editing a picture at high speed.

Thus, since the picture processing apparatus of the invention employs the dual-port memories capable of serial input/output in the first and second frame memories, the picture data transfer between these two frame memories can be performed at high speed.

Further, since the starting address values of the row and column addresses of the first and second frame memories can be changed, the contents of the transferred picture and the transfer location can be readily adjusted and edited.

### Brief Description of the Drawings

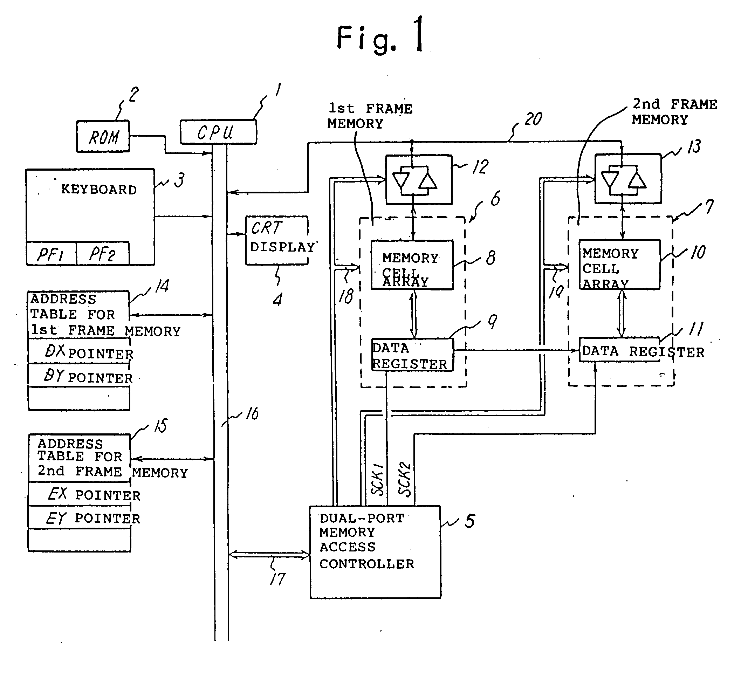

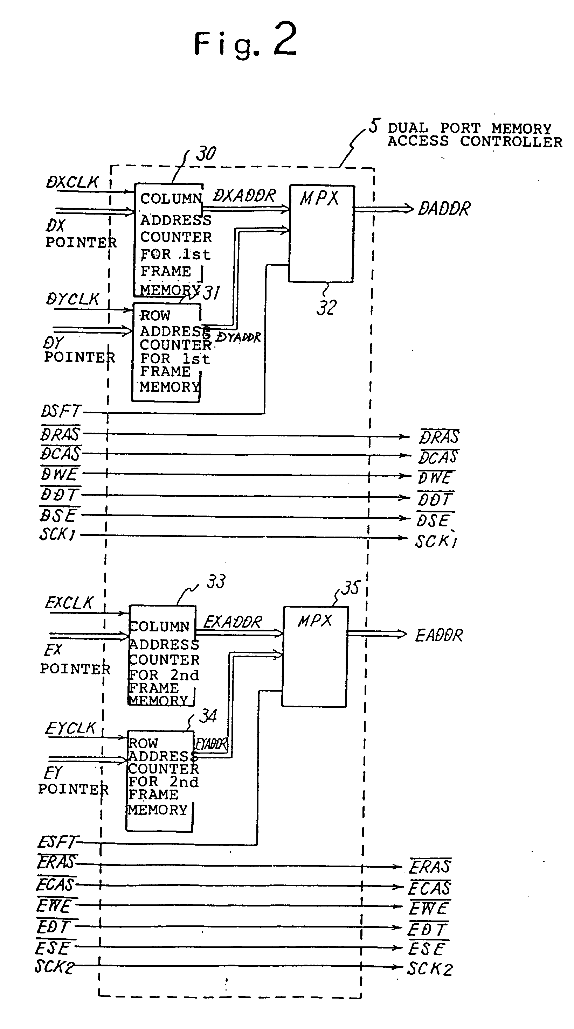

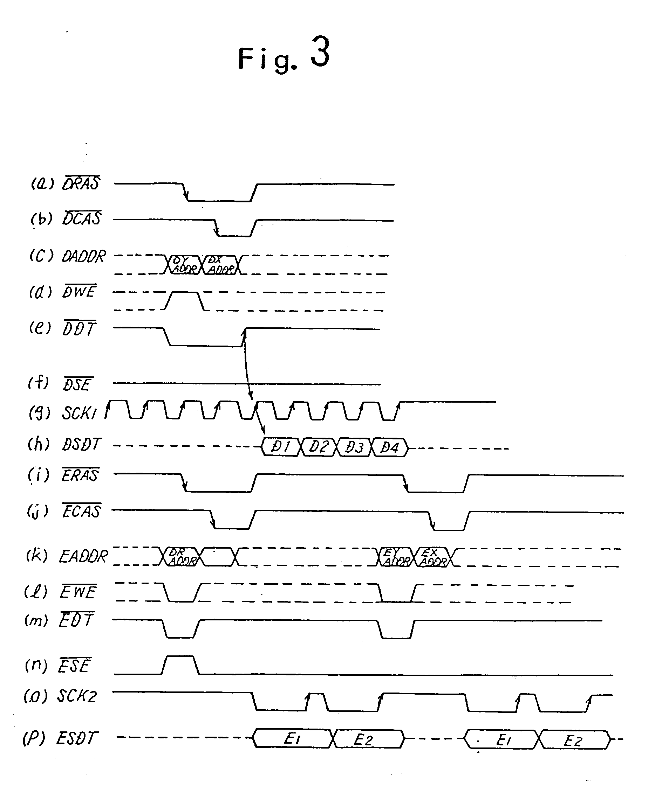

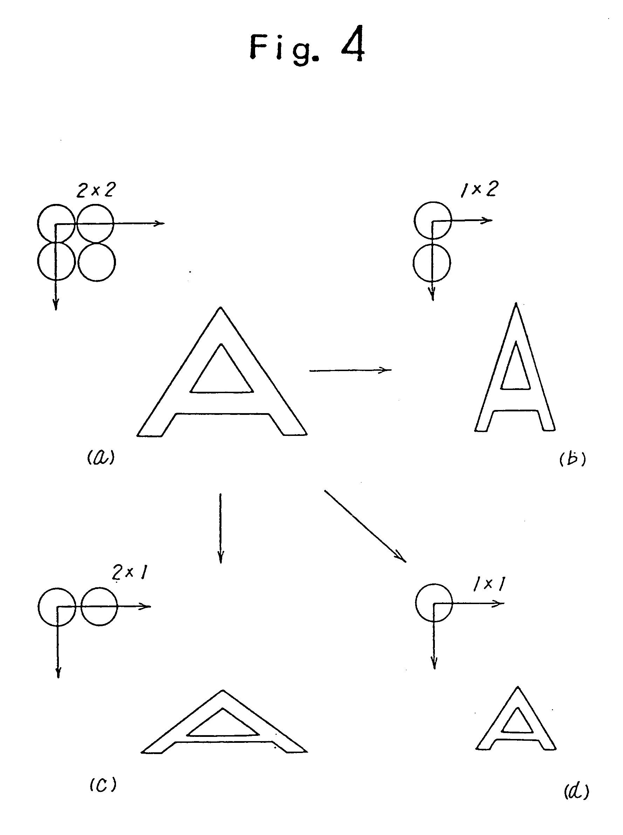

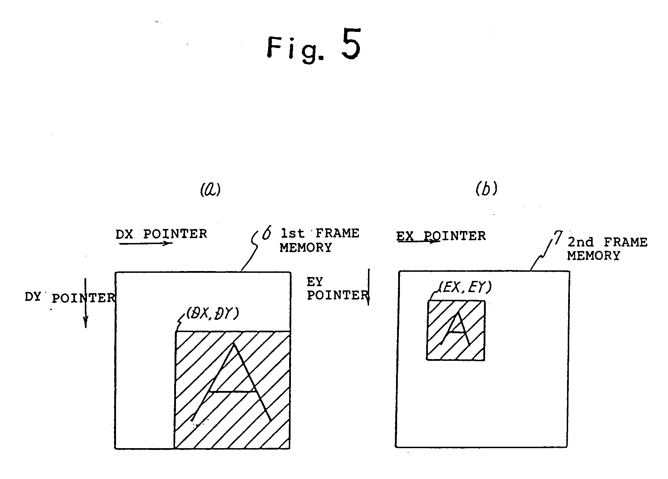

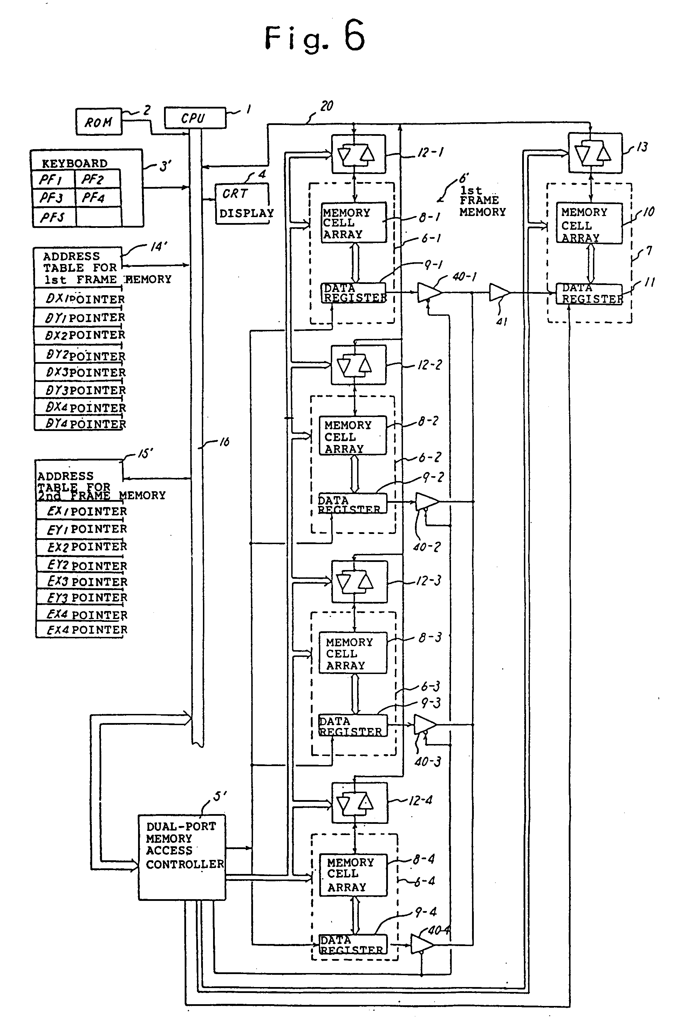

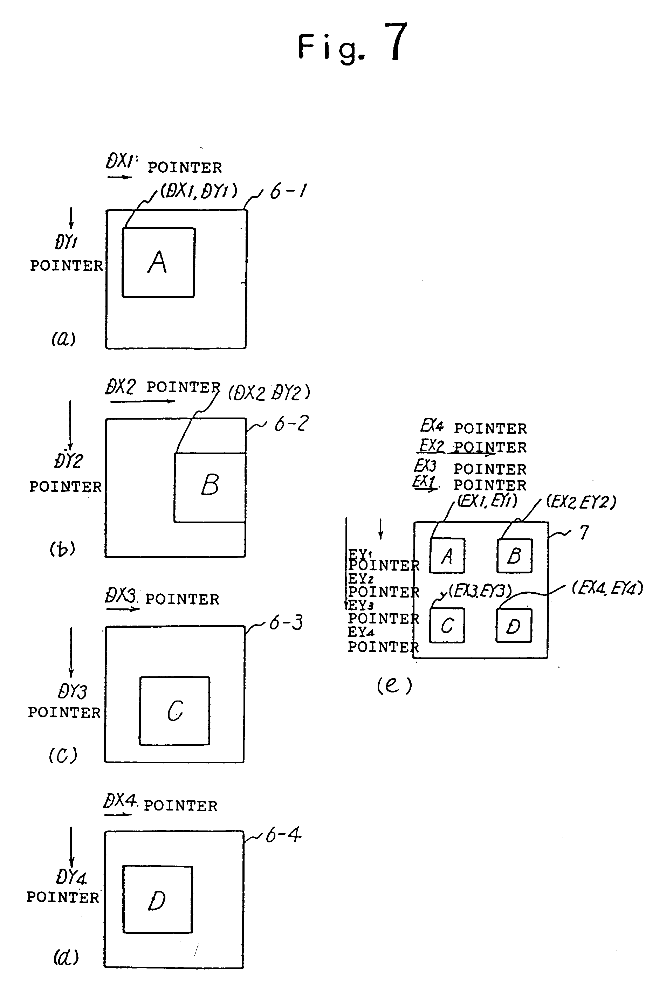

Fig. 1 is a system block diagram of a picture processing apparatus according to the invention, Fig. 2 is a circuit diagram showing a dual-port memory access controller of the picture processing apparatus of Fig. 1, Fig. 3 is a time chart of various signals associated with the picture processing apparatus, Figs. 4(a) through (d) are views for explaining a reducing operation performed by the picture processing apparatus of Fig. 1, Figs. 5(a) and (b) are schematic views illustrating the disposition of data in first and second frame memories, Fig. 6 is a system block diagram illustrating another embodiment of a picture processing apparatus according to the invention, and Fig. 7 is a view for explaining the manner in which plural items of picture data are reduced and edited for a single screen by the apparatus of Fig. 6.

Embodiments of the present invention will now be described in detail with reference to the drawings.

In Fig. 1, a picture processing apparatus operates under the control of a processor 1. A microprogram which indicates the control procedure of the processor 1 is stored in a read-only memory (ROM) 2. The picture processing apparatus executes picture reduction and the like in accordance with this microprogram.

Connected to a system bus 16 of the processor 1 are a keyboard 3, a CRT display 4, a dual-port memory access controller 5 via a bus 17, an address table 14 for a first frame memory, and an address table 15 for a second frame memory. A first frame memory 6 and a second frame memory 7 are connected to a data bus 20 of the processor 1 via bidirectional bus buffers 12, 13, respectively. The keyboard 3 has programmable function keys PF1, PF2 for selecting whether picture data in the first frame memory 6 or picture data in the second frame memory 7 are to be displayed on the CRT display 4.

The first frame memory 6 and second frame memory 7 each consist of a dual-port memory and respectively comprise memory cell arrays 8, 10 of random-access sections, and data registers 9, 11 of serial-access sections. If the memory cell arrays 8, 10 each have a capacity of e.g. 64 K bits, then each will have a cell array of 256 rows and 256 columns, and the data registers 9, 11 correspondingly will each have an array of 256 columns. The data registers 9, 11 are constructed so as to be capable of serial input/output.

In order to input a source picture to the first frame memory 6, a picture input unit (not shown), by way of example, is connected to the random-access port of the memory cell array 8 through the data bus 20 and bidirectional bus buffer 12. The input of the picture to the first frame memory 6 is performed on the basis of a control signal from the dual-port memory access controller 5. More specifically, during the acceptance of the picture, the bidirectional bus buffer 12 is turned on and prescribed rows and columns of the memory cell array 8 are designated successively from a row and column indicated by a DX pointer and an DY pointer of the address table 14 for the first frame memory.

In order to internally transfer a prescribed row of picture data between the memory cell array 8 and data register 9 in the first frame memory 6, a connection is made to the dual-port memory access controller 5 via a control information line 18 and the like, and a control signal for a row address and column address and a shift signal SCK1 are supplied. Further, the data register 9 is connected to the data register 11 of the second frame memory 7, and one row of data that have been stored in this data register are outputted serially from the serial access portion e.g. in synchronization with the shift clock signal SCK1 and are supplied to the data register 11 of the second frame memory 7.

Likewise, the second frame memory 7 is connected to the dual-port memory access controller 5, and picture data from the data register 9 are inputted serially from the serial-access port in synchronization with the shift clock SCK2. The data register 11 is so constructed that data stored therein are internally transferred to a prescribed row and column of the memory cell array 10 in accordance with a row address and column address control signal from a control information line and the shift clock SCK2.

When picture data stored in the memory cell array 8 of the first frame memory 6 are transferred to the memory cell array 10 of the second frame memory 7 to perform picture copying in the picture processing apparatus having the foregoing construction, the picture will be copied upon being reduced in the column direction at a reduction scale factor of 1/M by adopting 1:M as the ratio of the period of the shift clock SCK1 applied to the data register 9 to the period of the shift clock SCK2 applied to the data register 11. On the other hand, the picture will be copied upon being reduced in the row direction at a reduction scale factor of 1/N by adopting 1:N as the ratio of the period of a clock DYCLK of a row address counter 31 for the first frame memory 6 to the period of a shift clock EYCLK of a row address counter 34 for the second frame memory, as will be described below.

When the programmable function key PF1 on keyboard 3 is pressed, the unreduced picture data stored in the first frame memory 6 are displayed on the CRT display 4 via the bus buffer 12 and data bus 20. When the function key PF2 is pressed, on the other hand, the picture data copied in reduced size and stored in the second frame memory 7 are displayed on the CRT display 4 via the bus buffer 13 and data bus 20.

Fig. 2 is shows the details of the construction of the dual-port memory access controller 5. The latter is connected to the system bus 16 of processor 1 via the bus 17 and is supplied with the following signals:
DXCLK ... a signal for the first frame memory 6, namely a clock signal for a column address counter 30;
DX pointer ... a preset signal for the column address counter 20;
DYCLK ... a clock signal for a row address counter 31;
DY pointer ... a preset signal for the row address counter 31;
DSFT ... a selection signal of a multiplexer 32;
DRAS ... a word selection signal of the first frame memory 6;
DCAS ... a digit selection signal;
DWE ... a write-enable signal;
DDT ... a data transfer signal;
DSE ... a serial-enable signal;
SCK1 ... a shift clock signal;
EXCLK ... a signal for the second frame memory 7, namely a clock signal for a column address counter 33;
EX pointer ... a preset signal for the column address counter 33;
EYCLK ... a clock signal for a row address counter 34;
EY pointer ... a preset signal for the row address counter 34;
DSFT ... a selection signal of a multiplexer 35;
ERAS ... a word selection signal of the second frame memory 7;
ECAS ... a digit selection signal;
EWE ... a write-enable signal;
EDT ... a data transfer signal;
ESE ... a serial-enable signal;
SCK2 ... a shift clock signal.

When the DX pointer of the address table 14 for the first frame memory is preset in the address counter 30 for the first frame memory, an output signal DXADDR from the counter 30 forms a column address signal which is incremented successively from the preset value indicated by the DX pointer. When the DY pointer of the address table 14 for the first frame memory is preset in the address counter 31 for the first frame memory, an output signal DYADDR from the counter 31 forms a row address signal which is incremented successively from the preset value indicated by the DY pointer.

The output signal DXADDR of the column address counter 30 and the output signal DYADDR of the row address counter 31 are outputted by the multiplexer 32 at the timing of DADDR shown in Fig. 3(c). In other words, these output signals DXADDR, DYADDR are selected by the selection signal DSFT, staggered in terms of time and delivered to the first frame memory 6 as the address signal DADDR.

Similarly, when the EX pointer of the address table 15 for the second frame memory is preset in the address counter 33 for the second frame memory, an output signal EXADDR from the counter 33 forms a column address signal which is incremented successively from the preset value indicated by the EX pointer. When the EY pointer of the address table 15 for the second frame memory is preset in the address counter 34 for the second frame memory, an output signal EYADDR from the counter 34 forms a row address signal which is incremented successively from the preset value indicated by the EY pointer.

The output signal EXADDR of the column address counter 33 and the output signal EYADDR of the row address counter 34 are outputted by the multiplexer 35 at the timing of EXADDR shown in Fig. 3(k). In other words, these output signals EXADDR, EYADDR are selected by the selection signal ESFT, staggered in terms of time and delivered to the second frame memory 7 as the address signal EADDR.

The operation of the picture processing apparatus constructed as set forth above will now be described with reference to the time chart of Fig. 3. It will be assumed that picture data that are to be subjected to reduction have already been stored in the memory cell array 8 of the first frame memory 6.

Figs. 3(a) through (h) are portions of the time chart showing the timings at which one row of picture data are internally transferred from the memory cell array 8 of the first frame memory 6 to the data register 9, and at which the picture data are serially outputted from the data register 9 in synchronization with the shift clock SCK1.

The row address and column address of the memory cell array 8 designated by the row address signal DYADDR and column address signal DXADDR, respectively, are specified at the timings at which the word selection signal DRAS and digit selection signal DCAS shown in Figs. 3(a), (b) change from high (H) to low (L). Further, the write-enable signal DWE shown in Fig. 3(d) attains the H level at the timing at which DRAS changes from H to L. Therefore, one row of picture data from the specified row and and column address locations of the memory cell array 8 are internally transferred to the data register 9. This internal transfer begins at the timing at which the data transfer signal DDT shown in Fig. 3(e) changes from L to H. At the same time, the serial-enable signal DSE shown in Fig. 3(f) is held in the L state, so that the picture data in the data register 9 are outputted serially. That is, data D1, D2, D3, D4, ... in the data register 9 are serially outputted to the data register 11 of the second frame memory 7 successively as the DSDT signal synchronized to the shift clock signal SCK1 shown in Fig. 3(g).

The situation is illustrated in Fig. 5(a). Specifically, the address signals DXADDR, DYADDR from the counters 30, 31 access the hatched area of Fig. 5(a) to extract the picture data in this area.

Figs. 3(i) through (p) are portions of the time chart showing a pseudo-transfer cycle in which the serial port of the data register 11 of second frame memory 7 is placed in an input mode, and a cycle in which one row of picture data serially inputted to the data register 11 are internally transferred to the memory cell array 10.

The address signal EADDR of the data register 11 shown in Fig. 3(k) is specified at the trailing edge in the initial cycle of the word selection signal ERAS shown in Fig. 3(i). In the case of Fig. 3(k), the address EADDR is DRADDR. At this time, the write-enable signal EWE is L, the data transfer signal EDT is L, and the serial enable signal ESE is H, as shown in Figs. 3(l), (m) and (n). Accordingly, this cycle is the pseudo-transfer cycle in which the serial port is placed in the input mode, and the picture data D1, D2, D3, D4 outputted from the serial port of the first frame memory 6 are serially inputted from the serial port of the second frame memory 7 and stored in the data register 11 at the leading edges of the shift clock signal SCK2 shown in Fig. 3(o). The period of the shift clock SCK2 shown in Fig. 3(o) is twice the period of the shift clock SCK1 shown in Fig. 3(g), so that only the data D2, D4 among the four items of picture data D1, D2, D3, D4 shown in Fig. 3(h) are sampled and only two items of data E1, E2 are serially inputted to the data register 11. The one row of picture data consequently are reduced to 1/2 in the column direction before being transferred to the second frame memory 7.

After the one row of reduced picture data are thus serially inputted to the data register 11 in the initial cycle, the data stored in the data register 11 are transferred to the memory cell array 10 in the next cycle. Specifically, as shown in Figs. 3(i), (j) and (k), the row address signal EYADDR and column address signal EXADDR to the memory cell array 10 are specified at the trailing edges of the word selection signal ERAS and digit selection signal ECAS, respectively, of the next cycle. Since the write-enable signal EWE, data transfer signal EDT and serial-enable signal ESE are all L at this time, the data E₁, E₂ in data register 11 are successively transferred from the row and column address locations of the memory cell array 10 designated by the address values EY and EX.

Thus, the one row of picture data stored in the memory cell array 8 of the first memory 6 are reduced in the column direction and stored at a prescribed single row of the memory cell array 10 in the second frame memory 7.

The situation is illustrated in Fig. 5(b). Specifically, the address signals EXADDR, EYADDR from the counters 33, 34 access the hatched area of Fig. 5(b) to store the picture data from the first frame memory 6 in this area.

In order to transfer the next row of data in memory cell array 8 to the next row of memory cell array 10, it will suffice to designate the next row address value and column address value in the memory cell array 8 by the row address signal DYADDR and column address signal DXADDR in Fig. 3(c), designate the next row address value and column address value in the memory cell array 10 by the row address signal EYADDR and column address signal EXADDR in Fig. 3(k), and repeat the cycle from (a) to (p) of Fig. 3. If the output timing of the row address signal EYADDR is made twice that of the row address signal DYADDR at this time, then the picture data in the memory cell array 8 will be sampled and transferred to the memory cell array 10 every other row and therefore will be stored upon being reduced to 1/2 in the row direction.

The address table 14 for the first frame memory and the address table 15 for the second frame memory are formed in a RAM, thus making it possible to freely alter the abovementioned DX pointer, DY pointer, EX pointer and EY pointer. Therefore, it is possible to reduce the desired area of the first frame memory 6 at a prescribed scale factor and store the same in the desired area of the second frame memory 7.

Thus, if one row of picture data are transferred using dual-port memories in the first frame memory 6 and second frame memory 7, it is possible to transfer the entirety of the one row of data merely by designating the starting addresses DXADDR, DYADDR, EXADDR and EYADDR. In addition, it is possible to shorten memory access time markedly in comparison with a case where a row address and column address are designated for each individual item of picture data to be transferred. For example, if the first frame memory has a capacity of 256 x 256 bits, it will suffice to designate addresses only 256 times, so that access time can be shortened to approximately 1/256 in comparison with the time needed to access the memory 256 x 256 times. Thus, the picture data in the memory cell array 8 can be transferred to the prescribed area of memory cell array 10 at high speed.

To reduce the desired area of the first frame memory 6 at a prescribed scale factor in the column direction, it will suffice to set the interval between the timing of the serial output from data register 9 in the first frame memory 6 and the timing of the serial input to data register 11 in the second frame memory in such a manner that the aforementioned prescribed reduction scale factor is attained.

For example, in order to reduce the picture illustrated in Fig. 4(a) at a reduction scale factor of 1/2 in the column direction, as shown in Fig. 4(b), it will suffice to make the period of the shift clock SCK2 for the data register 11 twice that of the shift clock SCK1 for the data register 9. By so doing, 256 bits of data, for example, internally transferred to the data register 9 of the first frame memory 6 from the memory cell array 8 are compressed to 128 bits of data and stored in the data register 11 of the second frame memory 7.

In order to reduce the desired area of the first frame memory 6 at a prescribed scale factor in the row direction, it will suffice to set the frequency dividing ratio of the count in the counted value of the row address DYADDR to the first frame memory 6 to the counted value of the row address EYADDR to the second frame memory 7 in such a manner that the prescribed reduction scale factor is attained.

For example, in order to reduce the picture illustrated in Fig. 4(a) at a reduction scale factor of 1/2 in the row direction, as shown in Fig. 4(c), it will suffice to make the period of the clock signal EYCLK of the address counter 34 for the second frame memory twice that of the clock signal DYCLK of the address counter 31 for the first frame memory.

For example, in order to reduce the picture illustrated in Fig. 4(a) at a reduction scale factor of 1/2 in the column and row directions, as shown in Fig. 4(d), it will suffice to adopt 1:2 as the ratio of the period of shift clock SCK1 to that of shift clock SCK2 and, at the same time, to adopt 1:2 as the ratio of the period of clock signal DYCLK to that of clock signal EYCLK.

Since the clock signals SCK1, SCK2, DYCLK, EYCLK are supplied from the side of processor 1 and the ratios of the periods of these signals can be designated as parameters by the microprogram, these ratios can be changed with ease, thus making it possible to set the reduction scale factors in the row and column directions to the scale factors desired.

In a working apparatus constructed and operating as set for the above, picture data which have not been reduced and which are stored in the memory cell array 8 can be displayed on the CRT display 4 if the function key PF1 on the keyboard 3 is pressed after the picture data in the prescribed area of the memory cell array 8 are transferred to the prescribed area of the memory cell array 10 at the prescribed reduction scale factor. If the function key PF2 is pressed after the transfer, the picture data reduced and stored in the memory cell array 10 can be displayed on the CRT display instead. If the content of the reduced picture, the location thereof or the reduction scale factor is inadequate at this time, then, by way of example, the DX pointer and DY pointer of the address table 14 for the first frame memory and the EX pointer and EY pointer of the address table 15 for the second frame memory are altered using a numeric key section (not shown) on the keyboard 3, and the periods of the shift clock signals SCK1, SCK2 and clock signals DYCLK, EYCLK, which are given as parameters of the microprogram, are altered. This makes it possible revise and edit a reduced picture very easily.

Fig. 6 illustrates another embodiment of the present invention, and Fig. 7 is a view for explaining the manner in which plural items of picture data are each reduced and, at the same time, edited for a single screen in the apparatus of the embodiment shown in Fig. 6. In Fig. 6, units at the same locations as those shown in Fig. 1 are assigned like reference characters and a description thereof is omitted.

In Fig. 6, a first frame memory 6' comprises four frame memories 6-1, 6-2, 6-3 and 6-4. These frame memories 6-1, 6-2, 6-3 and 6-4 are identical dual-port memories and are equipped with respective memory cell arrays 8-1, 8-2, 8-3, 8-4 and data registers 9-1, 9-2, 9-3, 9-4.

The random-access ports of the memory cell arrays 8-1, 8-2, 8-3, 8-4 are connected to the data bus 20 via respective bidirectional bus buffers 12-1, 12-2, 12-3, 12-4, the serial-access ports of the data registers 9-1, 9-2, 9-3, 9-4 are connected to respective three-state buffers 40-1, 40-2, 40-3, 40-4, the three-state buffers 40-1, 40-2, 40-3, 40-4 are connected together into a wired OR and then connected to a receiver 41, and the receiver 41 is connected to the serial-access port of the data register 11 of second frame memory 7.

The arrangement is such that any one of the three-state buffers 40-1, 40-2, 40-3, 40-4 is selected at a single timing by a control signal from a dual-port memory access controller 5'.

A keyboard 3' has five programmable function keys PF1, PF2, PF3, PF4 and PF5. When key PF1 is pressed, the picture data in memory cell array 8-1 of frame memory 6-1 in the first frame memory 6' are displayed on the CRT display 4. When key PF2 is pressed, the picture data in memory cell array 8-2 of frame memory 6-2 are displayed on the CRT display 4. When key PF3 is pressed, the picture data in memory cell array 8-3 of frame memory 6-3 are displayed on the CRT display 4. When key PF4 is pressed, the picture data in memory cell array 8-4 of frame memory 6-4 are displayed on the CRT display 4. When key PF5 is pressed, the reduced and edited picture data in memory cell array 10 of the second frame memory 7 are displayed on the CRT display 4.

Column address pointers DX1, DX2, DX3, DX4 and row address pointer DY1, DY2, DY3, DY4 of each of the frame memories 6-1, 6-2, 6-3, 6-4 of the first frame memory 6' are stored in an address table 14' for the first memory. These pointers designate the starting addresses of the row and column addresses of the picture data, which are to be transferred, in the frame memories 6-1, 6-2, 6-3 and 6-4, as shown in Figs. 7(a) through (d).

The row and column addresses of the second frame memory to which each item of picture data from the frame memories 6-1, 6-2, 6-3, 6-4 is to be transferred are stored in an address table 15' for the second frame memory, as shown in Fig. 7(d).

In accordance with the construction set forth above, the dual-port memory access controller 5' simultaneously supplies the frame memories 6-1, 6-2, 6-3, 6-4 with the row and column addresses of the picture data, which are to be transferred, in these frame memories 6-1, 6-2, 6-3, 6-4, with the DX1, DX2, DX3, DX4, DY1, DY2, DY3, DY4 pointers designating the starting addresses, then turns on the three-state buffer 40-1 and turns off the three-state buffers 40-2, 40-3, 40-4, simultaneously supplies the second frame memory 7 with the row and address signals of the second frame memory 7, with the EX1, EY1 pointers designating the starting addresses, and transfers the picture data in the frame memory 6-1 to the second frame memory 7. Thus, a method similar to that used in Fig. 3 can be applied to reduce the picture data in frame memory 6-1 and then transmit the data to the upper left half of the second frame 7, as shown in Fig. 7.

Next, to transfer the picture data in the frame memory 6-2 to the second frame memory 7, only the three-state buffer 40-2 is turned on and the row and column address signals of the second frame memory 7 are supplied to the second frame memory 7, with the EX2, EY2 pointers designating the starting addresses. Thus, the picture data in the frame memory 6-2 shown in Fig. 7 are reduced and then transferred to the upper right half of the second frame memory 7. Thereafter, the picture data in the frame memory 6-3 are transferred to the lower left half of the second frame memory 7, and the picture data in the frame memory 6-4 are transferred to the lower right half of the second frame memory 7.

Thus, in accordance with this embodiment, it is possible to reduce a plurality of picture data at high speed and edit the data at a prescribed location at high speed.

Though two embodiments of the invention have been described, the invention is not limited thereto and can be modified in various ways without departing from the scope of the claims.

The illustrated and described picture processing apparatus transfers picture data, which have been stored in the memory cell array of a first frame memory, to the memory cell array of a second frame memory upon reducing the data at prescribed reduction scale factors in both the column and row directions by the ratio of the period of a first shift clock to the period of a second shift clock, or by the ratio of the signal period of a row address signal from first address generating means to the signal period of a row address signal from second address generating means. Accordingly, the apparatus is suitable for reducing a displayed picture at a prescribed scale.

## Claims

1. A picture processing apparatus for performing a picture reducing and editing operation between two frame memories, comprising:
first and second frame memories (6,7,6',7);
first and second address generating means (14,15,14',15') for the first and second frame memories (6,7,6',7); and
first and second shift clock generating means (SCK1,SCK2) for the first and second frame memories (6,7,6',7);
characterised in that:
the first and second frame memories (6,7,6',7) are of dual port construction and are each composed of a data register (9,11) having a serial-access port, and a memory cell array (8,10) connected to the data register (9,11) and having a random-access port;
the first and second address generating means (14,15,14',15') are operable to designate row and column addresses with respect to the memory cell arrays (8,10) of the frame memories (6,7,6',7);
setting means are provided for setting a picture reduction scale factor between said frame memories (6,7,6',7);
the first and second shift clock generating means (SCK1,SCK2) are operable to control a serial input/output of picture data from the serial-access port of the data register (9,11) of each of said frame memories (6,7,6',7); and
varying means are provided for changing clock periods of the shift clock generating means (SCK1,SCK2) in dependence upon a set reduction scale factor in a column direction.

2. A picture processing apparatus according to claim 1, characterised by having varying means for changing signal periods of row addresses, which are designated by said first and second address generating means, in dependence upon a set reduction scale factor in a row direction.

3. A picture processing apparatus according to claim 1, characterised by having setting means for setting starting address values of row and column addresses designated by said first and second address generating means.

## Patentansprüche

1. Bildbehandlungs-Vorrichtung zum Durchführen einer Bildverkleinerungs- und Aufbereitungsoperation zwischen zwei Teilbildspeichern, die umfaßt:
erste und zweite Teilbildspeicher (6, 7, 6', 7),
erste und zweite Adreßerzeugungsmittel (14, 15, 14', 15') für die ersten und zweiten Teilbildspeicher (6, 7, 6', 7) und
erste und zweite Schiebetakterzeugungsmittel (SCK1, SCK2) für die ersten und zweiten Teilbildspeicher (6, 7, 6', 7),
dadurch **gekennzeichnet,** daß
die ersten und zweiten Teilbildspeicher (6, 7, 6', 7) einen Aufbau mit einem Zweifach-Ein/Ausgabe-Anschluß haben und jeweils aus einem Datenregister (9, 11), das einen Seriellzugriffs-Anschluß hat, und einer Speicherzellenanordnung (8, 10), die mit dem Datenregister (9, 11) verbunden ist und einen Direktzugriffs-Anschluß hat, zusammengesetzt ist,
die ersten und zweiten Adreßerzeugungsmittel (14, 15, 14', 15') betreibbar sind, um Zeilen- und Spaltenadressen betreffend die Speicherzellenanordnung (8, 10) der Teilbildspeicher (6, 7, 6', 7) zu bezeichnen,
Einstellmittel zum Einstellen eines Bildverkleinerungsmaßstab-Faktors zwischen den Teilbildspeichern (6, 7, 6', 7) vorgesehen sind,
die ersten und zweiten Schiebetakterzeugungsmittel (SCK1, SCK2) betreibbar sind, um eine Seriell-Eingabe/Ausgabe von Bilddaten aus dem Seriellzugriffs-Anschluß des Datenregisters (9, 11) jedes der Teilbildspeicher (6, 7, 6', 7) zu steuern, und
Änderungsmittel zum Ändern von Taktperioden der Schiebetakterzeugungsmittel (SCK1, SCK2) in Abhängigkeit von einem eingestellten Verkleinerungsmaßstab-Faktor in einer Spaltenrichtung vorgesehen sind.

2. Bildbehandlungs-Vorrichtung nach Anspruch 1, dadurch **gekennzeichnet**, daß die Vorrichtung Änderungsmittel zum Ändern der Signalperioden von Zeilenadressen, die durch die ersten und zweiten Adreßerzeugungsmittel bezeichnet werden, in Abhängigkeit von einem Verkleinerungsmaßstab-Faktor in einer Zeilenrichtung hat.

3. Bildbehandlungs-Vorrichtung nach Anspruch 1, dadurch **gekennzeichnet,** daß die Vorrichtung Einstellmittel zum Einstellen von Beginnadreßwerten von Zeilen- und Spaltenadressen hat, die durch die ersten und zweiten Adreßerzeugungsmittel bezeichnet werden.

## Revendications

1. Un processeur d'images pour effectuer une opération de réduction d'image et d'édition entre deux mémoires d'images, comprenant :
une première et une seconde mémoire d'images (6,7,6',7) ;
un premier et un second moyen générateurs d'adresses (14, 15, 14', 15') pour la première et la seconde mémoire d'images (6,7,6',7) ; et
un premier et un second moyen générateurs d'horloge de décalage (SCK1, SCK2) pour la première et la seconde mémoire d'images (6,7,6',7) ;
caractérisé en ce que :
la première et la seconde mémoire d'images (6,7,6',7) sont de constructions à double port et sont chacune composées d'un registre de données (9, 11) ayant un port d'accès en série, et d'un réseau de cellules de mémoire (8, 10) connecté au registre de données (9, 11) et présentant un port à accès aléatoire ;
le premier et le second moyen générateurs d'adresses (14, 15, 14', 15') ont pour fonction de désigner des adresses de rangées et de colonnes dans les réseaux des cellules de mémoire (8, 10) des mémoires d'images (6, 7, 6', 7) ;
des moyens de réglage sont prévus pour régler un coefficient de réduction de l'image entre lesdites mémoires d'images (6, 7, 6', 7) ;
le premier et le second moyen générateurs d'horloge de décalage (SCK1, SCK2) ont pour fonction de commander une entrée/sortie en série des données d'images venant du port d'accès en série du registre des données (9, 11) de chacune desdites mémoires d'images (6, 7, 6', 7) ; et
des moyens de variation sont prévus pour modifier les périodes d'horloge des moyens générateurs d'horloge de décalage (SCK1, SCK2) en fonction d'un coefficient réglé de réduction dans une direction de colonne.

2. Un processeur d'images selon la revendication 1, caractérisé en ce qu'il comprend des moyens de variation pour modifier les périodes des signaux des adresses de rangées, qui ont été désignés par lesdits premier et second moyen générateurs d'adresses en fonction d'un coefficient de réduction fixé dans la direction des rangées.

3. Un processeur d'images selon la revendication 1, caractérisé en ce qu'il comprend des moyens de réglage pour régler les valeurs d'adresses de départ des adresses de rangées et de colonnes désignées par lesdits premier et second moyen générateurs d'adresses.
